# EUROPÄISCHE PATENTSCHRIFT

(11) **EP 2 531 879 B1**
(45) Veröffentlichungstag und Bekanntmachung des Hinweises auf die Patenterteilung: **12.07.2017**
(21) Anmeldenummer: 10776087.8
(22) Anmeldetag: 02.11.2010
(51) Int. Cl.: G02B 6/44, H02G 3/14

(54) **VERTEILERSCHRANK FÜR GLASFASERKABEL**
DISTRIBUTION BOX FOR OPTICAL FIBER CABLES
BOITIER DE DISTRIBUTION POUR CÂBLES À FIBRES OPTIQUES

(30) Priorität: 01.02.2010 DE 102010006610
(43) Veröffentlichungstag der Anmeldung: 12.12.2012
(73) Patentinhaber: Tyco Electronics Services GmbH, 8200 Schaffhausen (CH)
(72) Erfinder: BENEDETTO, Adrian, 12103 Berlin (DE); HARTMANN, Oliver, 14473 Potsdam (DE); MÖSSNER, Frank, 12277 Berlin (DE); SIELAFF, Michael, 12359 Berlin (DE); FISCHER, Thomas, 04519 Rachwitz / Zschortau (DE)
(74) Vertreter: Zucker, Volker
(86) Internationale Anmeldenummer: PCT/EP2010/006672
(87) Internationale Veröffentlichungsnummer: WO 2011/091824

(56) Entgegenhaltungen:
- EP-A1- 1 333 303
- EP-A2- 1 109 037
- EP-A2- 1 203 974
- EP-A2- 1 870 750
- DE-A1- 19 956 067
- DE-A1-102008 027 381
- US-A1- 2009 185 782
- US-B1- 7 418 186

## Beschreibung

Die Erfindung betrifft eine Box zur Aufnahme, zur strukturierten Ablage und zur Handhabung von Elementen der Netzwerktechnik, insbesondere der Glasfasertechnik.
Derartige Boxen werden in der Netzwerktechnik z.B. als Verteilerboxen verwendet. Sie dienen insbesondere dem Schutz von Elementen der Netzwerktechnik. Weiter dienen sie zur Ablage, Abzweigung oder Aufteilung von Lichtwellenleitern aus z.B. Bündeladern, wobei Bündeladern mehrere, in der Regel 12, Lichtwellenleiter umfassen können. Auch können Sie der Ablage, Abzweigung oder Aufteilung von Bündeladern aus Bündeladerkabeln dienen, wobei Bündeladerkabel mehrere Bündeladern umfassen.
Bei der Ablage und Handhabung von Lichtwellenleitern, Bündeladern und/oder Bündeladerkabel ist darauf zu achten, dass Übertragungseigenschaften der Lichtwellenleiter nicht negativ beeinträchtigt werden. Insbesondere ist die Einhaltung von Mindestbiegeradien zu beachten. Auch ist zu beachten, dass sich eine Lage von einmal abgelegten Lichtwellenleiter oder Bündeladern bei einer Handhabung, z.B. bei Arbeiten an den Lichtwellenleitern, möglichst wenig verändert, so dass die Übertragungseigenschaften der Lichtwellenleiter erhalten bleiben.
In der Regel weisen solche Boxen ein Gehäuse und einen Deckel auf. Um einen Zugang zu in einem Innenraum der Box angeordneten Elementen zu schaffen, muss der Deckel geöffnet werden. Bei der Ausführung von Arbeiten in der Box kann hierbei ein geöffneter Deckel, der am Gehäuse befestigt ist, hinderlich sein, da er zum einen eine Zugänglichkeit oder manuell in einer Position gehalten werden muss, die eine gewünschte Zugänglichkeit ermöglicht.

Aus der DE 10 2008 027 381 A1 ist eine Anschluss-Box für Glasfaserkabel bekannt, umfassend ein mindestens zweiteiliges Gehäuse mit einem Unterteil und einem Deckel, wobei der Deckel schwenkbar an dem Unterteil angeordnet ist, mindestens eine Aufnahme für einen Spleiß, mindestens eine Zuführung für ein Glasfaserkabel und eine Aufnahme für eine Kupplung, wobei die Seitenflächen des Deckels länger als die Stirnflächen des Deckels sind, wobei ein Schwenklager des Deckels an einer Stirnfläche des Deckels angeordnet ist. Vorzugsweise weist der Deckel im aufgeschwenkten Zustand eine Raststellung auf. Hierzu weist das Unterteil im Bereich der Stirnfläche des Deckels einen Zylinderstift auf, auf den zwei Scharnierelemente geklemmt sind, die am Deckel angeordnet sind. Die Scharnierelemente und der Zylinderstift bilden ein Schwenklager für den Deckel, wobei die Scharnierelemente und der Zylinderstift derart ausgebildet sind, dass diese in einer bestimmten Winkellage einrasten. Dieser Winkel ist größer 90 Grad und kleiner 180 Grad, vorzugsweise ist dieser Winkel 90 Grad oder 135 Grad.
Aus der EP 1 109 037 A2 ist eine Muffe mit herausnehmbarer Kassette bekannt, wobei der Träger ein Aufnahmeelement aufweist, wobei die Kassette ein Achselement aufweist, wobei das mindestens eine Achselement von dem Aufnahmeelement aufnehmbar ist, wobei das mindestens eine Achselement relativ zum Aufnahmeelement parallel zu einer Schwenkachse verschiebbar ist, wobei die Kassette mindestens ein Federelement aufweist, wobei mittels des mindestens einen Federelements eine Rückstellkraft auf das mindestens eine Achselement in eine Richtung parallel zur Schwenkachse ausübbar ist, falls das mindestens eine Achselelement aus einer Ausgangsstellung des mindestens einen Achselements relativ zum Aufnahmeelement verschoben wurde.
Es stellt sich das technische Problem, eine Box zu schaffen, deren Deckel lösbar mit deren Gehäuse verbunden ist, wobei der Deckel in einfacher Weise vom Gehäuse gelöst und wieder an dem Gehäuse befestigt werden kann.
Die Lösung des technischen Problems ergibt sich aus den Merkmalen des Anspruchs 1. Weitere vorteilhafte Ausführungen der Erfindung ergeben sich aus den Unteransprüchen.
Vorgeschlagen wird eine Box zur Aufnahme von Elementen der Netzwerktechnik.
Nachfolgend bezeichnet eine Verbindung eine formschlüssige, kraftschlüssige oder stoffschlüssige Verbindung. Eine Verbindung kann hierbei lösbar oder unlösbar sein.

Eine Verbindung eines ersten Gegenstands mit einem zweiten Gegenstand ist hierbei in der Regel durch ein Befestigungselement, Aufnahmeelement oder Verbindungselement des ersten Gegenstands und ein zu diesem Befestigungselement, Aufnahmeelement oder Verbindungselement des ersten Gegenstands korrespondierendes Befestigungselement oder Verbindungselement des zweiten Gegenstands herstellbar.

Nachfolgend bezeichnen lösbare Verbindungen insbesondere Rastverbindungen, jedoch auch Steckverbindungen, Schraubverbindungen und weitere lösbare Verbindung, die der Fachmann aus den ihm bekannten lösbaren Verbindung geeignet auswählt.

Hinsichtlich einer Rastverbindung wird nachfolgend davon ausgegangen, dass in einer allgemeinen Form eine Rastverbindung zwischen einem Rastelement und einer korrespondierenden Rastaufnahme herstellbar ist. Das Rastelement und die korrespondierende Rastaufnahme sind also eine spezielle Ausführungen von Befestigungs- oder Verbindungselementen. Hierbei kann das Rastelement z.B. als Rastnase oder Rastzunge oder als federnde Rastzunge ausgebildet sein. Die Rastaufnahme kann hierbei z.B. ein Rastschlitz und/oder eine Rastöffnung und/oder eine Rastvertiefung und/oder Rastschenkel sein.

Die vorgeschlagene Box dient insbesondere der Aufnahme und Ablage von Lichtwellen- und/oder Kupferleitern. Die Box umfasst mindestens ein Gehäuse und mindestens einen Deckel. Hierbei kann das Gehäuse eine Grundfläche, eine rechte, eine linke Seitenfläche, eine obere und eine untere Stirnfläche aufweisen. Die Grundfläche kann hierbei eine geschlossene Fläche sein. Alternativ oder kumulativ kann eine Bodenplatte an der Grundfläche befestigbar sein. Hierzu kann die Grundfläche mindestens ein Befestigungselement und die Bodenplatte mindestens ein korrespondierendes Befestigungselement aufweisen. Weiter kann das Gehäuse ein gehäuseseitiges Teil einer Verschlussvorrichtung aufweisen.

Weiter umfasst die Box einen Deckel. Auch der Deckel kann eine rechte Seitenfläche, eine linke Seitenfläche, eine obere und eine untere Stirnfläche aufweisen. Weiter kann auch der Deckel einen deckelseitigen Teil einer Verschlussvorrichtung aufweisen. Mittels der Verschlussvorrichtung kann die Box verschlossen werden. Die Verschlussvorrichtung kann beispielsweise als Schloss und/oder als Verplombungsvorrichtung ausgebildet sein.

Der Deckel ist hierbei schwenkbar an dem Gehäuse befestigt. Hierzu weist das Gehäuse mindestens ein Achselement auf. Hierbei ist der Deckel um dieses Achselement schwenkbar. Vorzugsweise ist das Achselement in einem Bereich der oberen Stirnfläche des Gehäuses angeordnet. Eine zentrale Längsachse des Achselements definiert hierbei eine Schwenkachse. Hierbei verläuft die Schwenkachse parallel zur oberen Stirnseite. Selbstverständlich ist auch vorstellbar, das Achselement im Bereich einer weiteren Seiten- oder Stirnfläche anzuordnen, wobei die Schwenkachse in diesem Fall parallel zu der jeweiligen Seiten- oder Stirnfläche verläuft.

Der Deckel weist ein Aufnahmeelement für das Achselement auf. Mittels des Aufnahmeelements ist das Achselement aufnehmbar. Nimmt das Aufnahmeelement des Deckels das Achselement des Gehäuses auf, so ist der Deckel an dem Gehäuse befestigt und schwenkbar um die Schwenkachse. Hierbei erfüllen das Achselement und das Aufnahmeelement also zwei Funktionen. Einerseits bilden Achselement und Aufnahmeelement ein korrespondierendes Paar von Befestigungselementen zur Befestigung des Deckels an dem Gehäuse. Andererseits ermöglichen das Achselement und das Aufnahmeelement eine Schwenkbewegung des Deckels um die Schwenkachse.

Vorzugsweise ist die Verbindung zwischen Achselement und Aufnahmeelement eine Steckverbindung. Hierbei kann das Vorzugsweise ist die Verbindung zwischen Achselement und Aufnahmeelement eine Steckverbindung. Hierbei kann das Aufnahmeelement ein zylinderförmiges Loch, vorzugsweise ein Sackloch, aufweisen. In dieses Loch oder Sackloch kann ein ebenfalls zylinderförmiger Stift (Achselement) eingesteckt werden. Hierbei ist ein Außenradius des Stiftes um ein vorbestimmtes Maß kleiner als ein Innenradius des Loches oder Sackloches. Das vorbestimmte Maß erlaubt eine Drehung des Stiftes im Loch oder Sackloch. Diese Verbindung soll im Folgenden als Stift-Loch-Verbindung bezeichnet werden.

Weiter ist der Deckel lösbar an dem Gehäuse befestigt. Hierzu müssen also das Achselement und das Aufnahmeelement derart ausgebildet sein, dass sie eine lösbare Verbindung von Deckel und Gehäuse ermöglichen.

Erfindungsgemäß ist hierzu das mindestens eine Achselement parallel zu der Schwenkachse relativ zum Aufnahmeelement verschiebbar. Nachfolgend sei eine befestigte Ausgangsstellung des Achselements als eine Stellung definiert, in der das Achselement von dem Aufnahmeelement aufgenommen wird. Weiter sei eine unbefestigte Ausgangsstellung des Aufnahmeelements definiert, in der das Achselement relativ zum Gehäuse eine gleiche Stellung einnimmt wie in der befestigten Ausgangsstellung, wobei jedoch das Achselement nicht von dem Aufnahmeelement aufgenommen wird. In der unbefestigten Ausgangsstellung ist also der Deckel nicht an dem Gehäuse befestigt. Folglich ist in der befestigten Ausgangsstellung der Deckel an dem Gehäuse befestigt und schwenkbar um die Schwenkachse. Nachfolgend umfasst der Begriff Ausgangsstellung die befestigte sowie die unbefestigte Ausgangsstellung.

Das Achselement kann hierbei parallel zur Schwenkachse relativ zum Aufnahmeelement aus der Ausgangsstellung heraus z.B. in eine zweite Stellung verschoben werden.
Um das Achselement aus der Ausgangsstellung in die zweite Stellung zu verschieben, kann also entweder das Achselement verschoben werden, während das Aufnahmeelement keine Verschiebebewegung ausführt oder das Aufnahmeelement verschoben werden, während das Achselement keine Verschiebebewegung ausführt.
Im Folgenden wird eine relative Bewegung des Achselements zum Aufnahmeelement für das Beispiel eines beweglichen Achselements erläutert. Hierbei liegt es im Ermessen des Fachmanns, die erläuternden Prinzipien auch auf das Beispiel eines beweglichen Aufnahmeelements zu übertragen.
Z.B. kann das Achselement aus der befestigten Ausgangsstellung in die zweite Stellung verschoben werden, wobei das Achselement in der zweiten Stellung nicht mehr von dem Aufnahmeelement aufgenommen wird. Somit ist der Deckel in der zweiten Stellung nicht mehr mit dem Gehäuse verbunden und kann vom Gehäuse gelöst oder abgenommen werden.
Zur Befestigung des Deckels am Gehäuse kann es beispielsweise notwendig sein, dass Achselement aus der unbefestigten Ausgangsstellung in die zweite Stellung zu verschieben, den Deckel auf das Gehäuse aufzusetzen oder ihn an dem Gehäuse anzubringen und dann das Achselement aus der zweiten Stellung in die befestigte Ausgangsstellung zu verschieben.
Dabei weist die vorgeschlagene Box mindestens ein Federelement auf. Mittels des Federelements ist eine Rückstellkraft auf das mindestens eine Achselement in eine Richtung parallel zur Schwenkachse ausübbar, falls das mindestens eine Achselement aus der Ausgangsstellung des mindestens einen Achselements verschoben wurde.
Das Federelement kann hierbei seriell oder parallel zu dem Achselement angeordnet sein. In der Ausgangsstellung des Achselements ist das Federelement entspannt oder mit einer vorbestimmten Federspannung vorgespannt. Wird nun beispielsweise das Achselement aus der Ausgangsstellung heraus in Richtung der zweiten Stellung verschoben, so steigt eine Federspannung des Federelements, die entgegengesetzt zur Richtung der Verschiebung, jedoch auch parallel zur Schwenkachse, gerichtet ist. Diese Federspannung bewirkt also die Rückstellkraft. Zum Verschieben des Achselements aus der Ausgangsstellung muss demnach eine Verschiebekraft aufgewendet werden, die größer ist als die Federspannung des Federelements. Die Verschiebekraft kann z.B. manuell aufgebracht werden. Hierzu kann das Achselement z.B. ein Betätigungselement aufweisen, wobei mittels des Betätigungselements eine z.B. manuelle Kraft auf das Achselement, ausübbar ist.
Wird keine Verschiebekraft auf das Achselement ausgeübt und befindet sich dieses nicht in der Ausgangsstellung, so bewirkt die Rückstellkraft, dass das Achselement in die Ausgangsstellung zurückbewegt wird.
Um den Deckel vom Gehäuse zu lösen, kann also das Achselement entgegen der Rückstellkraft aus der unbefestigten Ausgangsstellung in die zweite Stellung verschoben werden und der der Deckel vom Gehäuse abgenommen oder gelöst werden. Wird nach dem Abnehmen oder Ablösen keine Verschiebekraft mehr ausgeübt, so kehrt das Achselement in die nun unbefestigte Ausgangsstellung zurück.
Um den Deckel am Gehäuse zu befestigen, kann das das Achselement entgegen der Rückstellkraft aus der befestigten Ausgangsstellung in die zweite Stellung verschoben werden und der der Deckel auf das Gehäuse aufgesetzt oder an diesem angebracht werden. Wird nach diesem Aufsetzen oder Anbringen keine Verschiebekraft mehr ausgeübt, so kehrt das Achselement in die nun befestigte Ausgangsstellung zurück.
Hierbei bezeichnet das Aufsetzen oder Anbringen eine Positionierung des Deckels zum Gehäuse derart, dass durch eine rein axiale Bewegung des Achselements dieses von dem Aufnahmeelement aufgenommen wird. Insbesondere kann hierbei eine zentrale Längsachse des Aufnahmeelements gleich einer zentralen Längsachse des Achselements sein.
Dabei ist das Federelement an dem Achselement angespritzt. Hierbei sind also das Federelement und das Achselement als ein Bauteil ausgebildet. Hierbei ist das Federelement an einem Ende des Federelements fest mit dem Achselement verbunden, wobei der Rest des Federelements relativ zum Achselement frei beweglich ist. Hierdurch ergibt sich in vorteilhafter Weise eine kostengünstige Herstellung des Achs- und Federelements.
In einer Ausführungsform weisen das Gehäuse, vorzugsweise das Achselement, und/oder der Deckel, vorzugsweise das Aufnahmeelement, Anschlagelemente auf, die eine axiale Bewegung des Achselements relativ zum Aufnahmeelement auf eine Bewegung zwischen der Ausgangsstellung und der zweiten Stellung begrenzen.
Im Falle einer Stift-Loch-Verbindung kann also der Stift derart relativ zum Loch verschoben werden, dass er nicht mehr in das Loch eingesteckt ist. Vorstellbar ist also, dass entweder der Stift verschoben wird, während das Loch keine Verschiebebewegung ausführt oder das Loch, insbesondere das Aufnahmeelement, verschoben wird, während der Stift keine Verschiebebewegung ausführt.

In einer bevorzugten Ausführungsform weist das Aufnahmeelement Mittel zum Unterstützen des Anbringens des Deckels auf. Diese können z.B. derart ausgebildet sein, dass beim Vorgang des Anbringens, also beim Positionieren des Deckels relativ zum Gehäuse, mittels der Mittel zum Unterstützen des Anbringens eine Kraft auf das Achselement übertragen wird, die der Rückstellkraft entgegengesetzt ist. Hierbei wird also während des Anbringens das Achselement aus der unbefestigten Ausgangsstellung in die zweite Stellung verschoben, wobei die Verschiebekraft mittels der Mittel zum Unterstützen des Anbringens in das Achselement eingeleitet wird. Hierdurch ergibt sich in vorteilhafter Weise, dass zusätzlich zum Positionieren keine weitere Tätigkeit, z.B. ein Aufbringen einer manuellen Kraft auf das Achselement mittels eines Betätigungselements, durchgeführt werden muss. Dies vereinfacht den Vorgang des Befestigens.
Vorzugsweise ist das Mittel zum Unterstützen des Anbringens als geschrägte Fläche ausgebildet. Beim Anbringen wird diese geschrägte Fläche entlang eines Endes des Achselements geführt, dass dieses aufgrund einer Neigung der geschrägten Fläche entgegen der Rückstellkraft axial in die zweite Stellung verschoben wird. Beispielsweise kann an einem Ende der geschrägten Fläche das Loch oder Sackloch angeordnet sein. Nachdem die geschrägte Fläche vollständig entlang des Endes des Achselements geführt wurde, wird aufgrund des Achsloches keine Verschiebekraft mehr auf das Achselement ausgeübt. Dieses kann aufgrund der Rückstellkraft in das Loch einschnappen (befestigte Ausgangsstellung).
In einer weiteren Ausführungsform weist die Box mindestens ein Aufnahmeelement für mindestens ein Dichtelement auf, mittels dessen das mindestens eine Dichtelement an der Box arretierbar ist. Das Dichtelement dient hierbei vorzugsweise der Einführung von Kabeln, Lichtwellenleitern oder Bündeladern in die Box. Das vorgeschlagene Aufnahmeelement ermöglicht hierbei einerseits eine Abdichtung der Box gegenüber Feuchtigkeit, auch wenn z.B. Kabel in diese eingeführt werden. Andererseits ermöglicht es eine fixierte Befestigung des Dichtelements und somit auch von durch die Dichtelemente geführten Kabeln an der Box. Werden z.B. Arbeiten am Kabel in oder außerhalb der Box durchgeführt, so ist hiermit in vorteilhafter Weise gewährleistet, dass das Dichtelement und das Kabel aus dem Aufnahmeelement oder der Box nicht herausrutschen können.

Vorzugsweise ist eine Arretierung des Dichtelements an der Box mittels einer Rastverbindung durchführbar. Hierfür kann die Box, insbesondere das Gehäuse, Rastzungen oder Rastnasen aufweisen, die im eingesetzten Zustand eines Dichtelements mit korrespondierenden Rastelementen des Dichtelements oder Rastaufnahmen verrasten.

Die Rastnasen können z.B. senkrecht von einer Bodenfläche des Gehäuses hervorstehen. Weiter können diese an einem oberen Ende eine Verdickung aufweisen. Hierbei verdickt sich die Rastnase von ihrem oberen Ende bis zu einer Haltekante. Beim Einstecken gleitet das Dichtelement über die Verdickung, wodurch die Rastnasen entgegen einer Federkraft aus einer Ausgangsstellung der Rastnase vom Dichtelement weggedrückt wird. Ist das Dichtelement vollständig eingesetzt, so drückt dieses die Rastnase nicht mehr weg. Die Federkraft der Rastnase bewirkt deren Rückkehr in ihre Ausgangsstellung. Dabei schiebt sich die Haltekante über eine Oberfläche des Dichtelements, wodurch dieses geklemmt wird.

Selbstverständlich sind auch andere, vorzugsweise lösbare, Verbindungen von Dichtelement und Box mittels des Aufnahmeelements denkbar.

In einer weiteren Ausführungsform weist die Box mindestens ein Aufnahmeelement für mindestens einen Achshalter auf. Mittels dieses Aufnahmeelements ist der mindestens eine Achshalter an einer Bodenfläche der Box vorzugsweise lösbar befestigbar. Vorzugsweise ist die Verbindung als Rastverbindung ausgebildet.

Auch kann die Box über ein Kopplungselement mit dem Achshalter verbunden werden. Hierbei wird der Achshalter an dem Kopplungselement befestigt. Das Kopplungselement weist wiederum ein Befestigungselement auf, mittels dessen das Kopplungselement an dem Aufnahmeelement der Box für den Achshalter befestigbar ist.

Der Achshalter kann hierbei ein Teil einer Halterung für mindestens eine Kassette sein. Die Halterung umfasst hierbei die mindestens eine Kassette. Die Kassette dient hierbei vorzugsweise der strukturierten Ablage von Lichtwellenleitern. Weiter umfasst die Halterung den mindestens einen Achshalter und mindestens ein Achselement. Das Achselement ist hierbei an dem Achshalter befestigt. Der Achshalter kann hierbei z.B. eine rechteckförmige Halteplatte sein. Weiter weist die Kassette, insbesondere eine Term-Kassette oder eine Spleiß-Kassette oder eine Term-Spleiß-Kassette, mindestens ein Element zur drehbaren Lagerung auf. Die Elemente zur drehbaren Lagerung sind vorzugsweise an einer Stirnseite einer Kassette angeordnet. Weiter weist die Stirnseite einer Kassette eine Ein-/ Auslassöffnung zum Einführen von Lichtwellenleitern oder Bündeladern in die Kassette oder zum Ausführen aus der Kassette heraus auf. Hierbei ist das mindestens eine Element zur drehbaren Lagerung der Kassette vorzugsweise drehbar auf dem Achselement gelagert.

Hierdurch ergibt sich in vorteilhafter Weise, dass eine Halterung zur strukturierten Ablage von Lichtwellenleitern, Bündeladern und weiteren Kabeln in der Box, inbesondere lösbar, befestigt werden kann.

In einer weiteren Ausführungsform weist die Box mindestens eine Vorrichtung zur Ablage von Bündeladern auf. Die Vorrichtung zur Ablage von Bündeladern kann hierbei kreisförmig ausgeführt sein, wobei ein Radius der Vorrichtung mindestens gleich einem Mindestbiegeradius der Lichtwellenleiter oder der Bündelader ist. Die Vorrichtung zur Ablage von Bündeladern kann hierbei als Führungsrippe oder als Führungskanal ausgebildet sein. Auch kann die Vorrichtung zur Ablage von Bündeladern als über einem Boden der Spleiß-Kassette erhabener Führungskörper ausgebildet sein.

In einer weiteren Ausführungsform weist die Box mindestens ein Befestigungselement für mindestens ein Element zur Kabelführung auf. Mittels des mindestens einen Elements zur Kabelführung ist hierbei mindestens eine Bündelader und/oder ein Lichtwellenleiter mit einem vorbestimmten Biegeradius führbar. Somit kann in vorteilhafter Weise ein gewünschter Verlauf einer Bündelader oder eines Lichtwellenleiters in der Box unter Einhaltung des Mindestbiegeradius realisiert werden. Vorzugsweise ist eine Verbindung zwischen dem Befestigungselement und dem Element zur Kabelführung eine Rastverbindung. Selbstverständlich sind auch andere, vorzugsweise lösbare, Verbindungen von Befestigungselement und dem Element zur Kabelführung denkbar.

In einer weiteren Ausführungsform weist mindestens eine Seitenwand der Box, insbesondere eine rechte und/oder linke Seitenwand des Gehäuses, eine Sollbruchstelle auf. Mittels der Sollbruchstelle ist ein vorbestimmter Teil der Seitenwand aus dieser herausbrechbar. Sind keine Teile der Seitenwand aus dieser herausgebrochen, so ist die Box weiterhin dicht gegenüber z.B. Feuchtigkeit und Schmutz. Durch ein Herausbrechen von Teilen der Seitenwand mittels der Sollbruchstellen können in vorteilhafter Weise Öffnungen zum Führen von z.B. Kabeln in die Box oder aus der Box heraus geschaffen werden. Bevorzugt ist benachbart zu einem Teil der Seitenwand, der eine Sollbruchstelle aufweist, ein Aufnahmeelement für mindestens ein Dichtelement angeordnet. Somit kann in vorteilhafter Weise ein Dichtelement in eine Öffnung eingesetzt und arretiert werden, wodurch auch durch Sollbruchstellen herstellbare Öffnungen abdichtbar sind.

In einer weiteren Ausführungsform weist die Box mindestens eine Vorrichtung zur Aufnahme mindestens eines Verbindungselements auf. Mittels der mindestens einen Vorrichtung zur Aufnahme mindestens eines Verbindungselements ist mindestens ein Verbindungselement in die Box aufnehmbar oder an dieser befestigbar. Hierbei kann das Aufnahmeelement für ein Dichtelement zusätzlich als Aufnahmeelement für das Verbindungselement dienen. Alternativ oder zusätzlich kann die Box ein separates Aufnahmeelement für das Verbindungselement aufweisen. Mittels des Verbindungselements sind z.B. zwei Boxen verbindbar. Vorzugweise ist mittels des Verbindungselements eine seitliche Aneinanderreihung von mindestens zwei Boxen realisierbar. Hierzu kann z.B. ein Verbindungselement von einer Vorrichtung zur Aufnahme eines Verbindungselements einer ersten Box und von einer Vorrichtung zur Aufnahme eines Verbindungselements einer zweiten Box aufgenommen werden.

Vorzugsweise ist eine Verbindung zwischen der Vorrichtung zur Aufnahme eines Verbindungselements und dem Verbindungselement eine Rastverbindung. Selbstverständlich sind auch andere, vorzugsweise lösbare, Verbindungen denkbar. Das Verbindungselement kann beispielsweise einen Verbindungskanal aufweisen, der vorzugsweise im Verbindungselement verläuft. Hierbei können z.B. Stirnseiten des Verbindungselements Öffnungen zum Verbindungskanal aufweisen. Durch den Verbindungskanal können z.B. Kabel von der ersten Box in die zweite Box geführt werden.

Alternativ kann die Vorrichtung zur Aufnahme eines Verbindungselements außerhalb der Box, z.B. an einer Unterseite des Gehäuses, angeordnet sein. Hierbei kann die Vorrichtung zur Aufnahme der Aufnahme z.B. einer Blechzunge dienen, die als Verbindungselement dient.

Weiter kann die Box zusätzlich mindestens ein Element zur Führung von Bündeladern und/oder Lichtwellenleitern aufweisen. Hierdurch kann ein gewünschter Verlauf von Lichtwellenleiter und/oder Bündeladern in der Box realisiert werden.

Die Ausgestaltungen der verschiedenen Verbindungen als lösbare Verbindungen, z.B. der Verbindung von Box und Dichtelement oder der Verbindung von Box und Achshalter, ermöglichen in vorteilhafter Weise eine modulare und nutzerspezifische Bestückung der Box, die an eine bestimmte Verwendung angepasst werden kann. Selbstverständlich können die Verbindungen auch als nicht-lösbare Verbindungen ausgeführt sein, wodurch die Box jedoch auf bestimmte Verwendungen eingeschränkt ist.

Die Erfindung wird nachfolgend anhand eines Ausführungsbeispiels näher erläutert. Die Figuren zeigen:

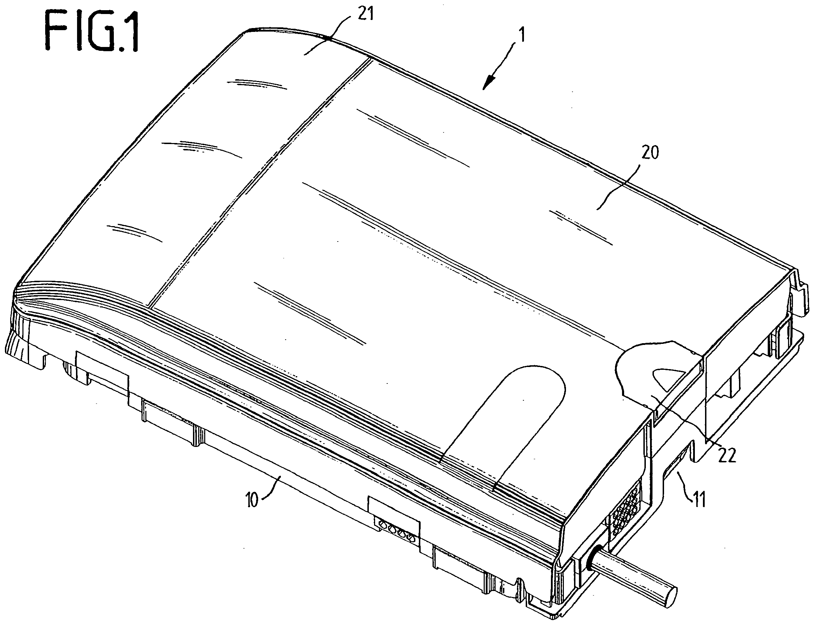

- Fig. 1: eine perspektivische Vorderansicht auf eine Box mit geschlossenem Deckel,
- Fig. 2: eine perspektivische Unteransicht auf die Box,
- Fig. 3: eine perspektivische Vorderansicht auf die Box mit geöffnetem Deckel,
- Fig. 4: eine perspektivische Darstellung einer Aufnahme für ein Achselement,
- Fig. 5: eine perspektivische Darstellung eines Achselements vor dem Einsetzen in einen Achselementhalter,
- Fig. 6: eine perspektivische Darstellung des Achselements nach dem Einsetzen in den Achselementhalter,
- Fig. 7: eine perspektivische Darstellung einer bestückten Box ohne Deckel,
- Fig. 8: eine Explosionsdarstellung eines Dichtelements für Patchcordkabel,
- Fig. 9: eine perspektivische Vorderansicht auf zwei seitlich aneinandergereihte Boxen und
- Fig. 10: eine Detaildarstellung der Kopplung zwischen den Boxen.

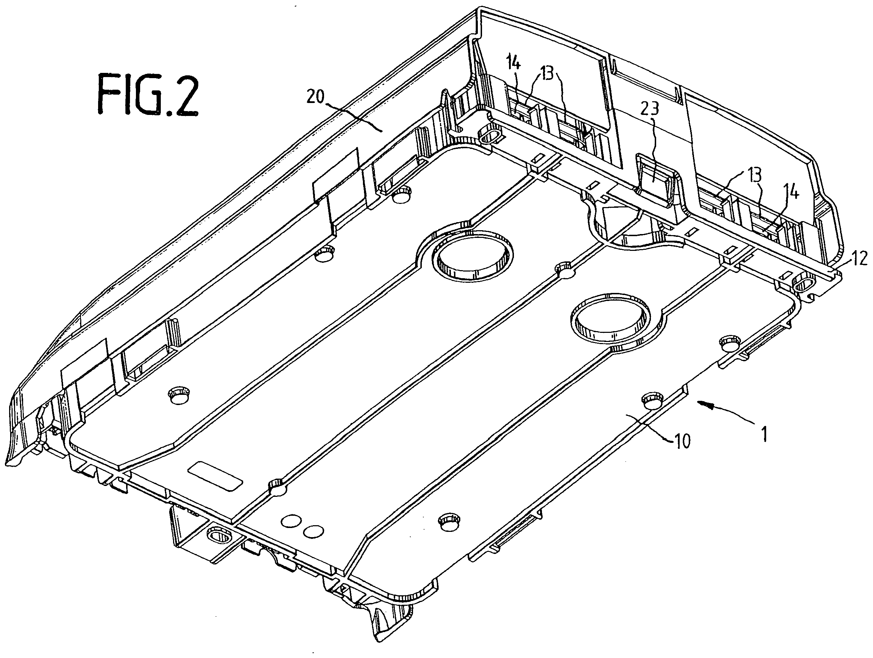

Die Box 1 zur Aufnahme und Ablage von Lichtwellenleitern umfasst ein Gehäuse 10 bzw. Unterteil und einen Deckel 20. Der Deckel 20 ist leicht gewölbt und fällt in einem hinteren Bereich 21 stärker ab. Der Deckel 20 weist im vorderen Bereich eine Rastnase 23 auf, mittels derer der Deckel 20 mit dem Gehäuse 10 verrastbar ist, Fig. 2. Das Gehäuse 10 weist eine Aufnahme 11 für ein Schloss auf, um die Box 1 abzuschließen. Hierzu weist der Deckel 20 verdeckt durch die Rastlasche 22 mindestens eine Aufnahme auf, um Sperrelemente des Schlosses aufzunehmen. Das Gehäuse 10 weist diverse Dichtelemente auf, um Bündeladern, Patchcordkabel oder Lichtwellenleiter in die Box 1 zu führen, ohne dass Schmutz oder Feuchtigkeit eindringen kann. Diese Dichtelemente werden später noch näher erläutert.

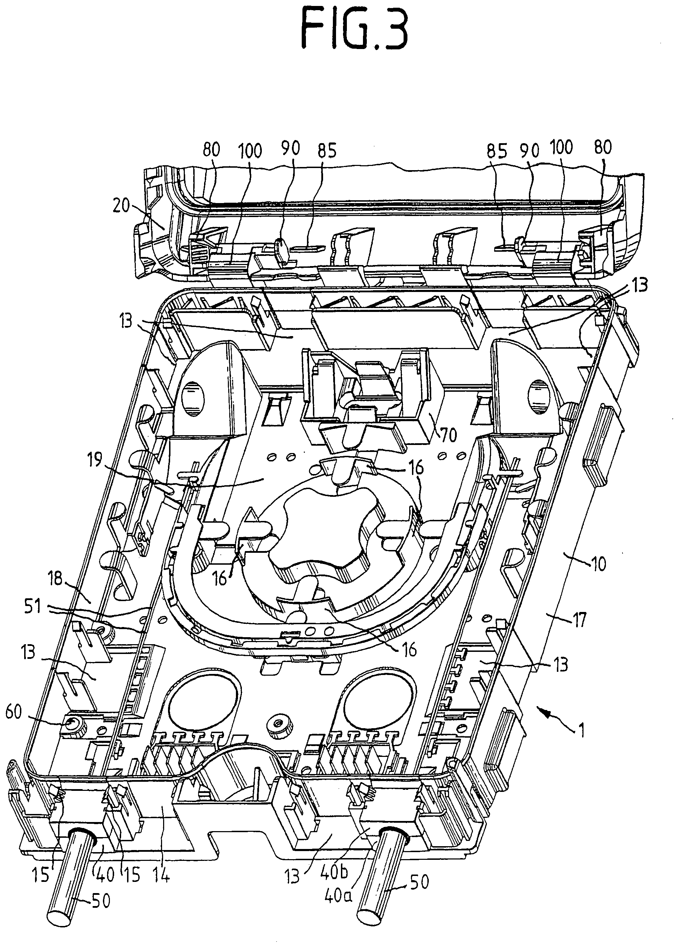

In der Fig. 2 ist die Box 1 in einer Unteransicht dargestellt. An der vorderen Stirnseite 12 des Gehäuses 10 sind Aufnahmeelemente 13 (nachfolgend kurz als Aufnahmen bezeichnet) für nicht dargestellte Dichtelemente angeordnet, die ebenfalls im Zusammenhang mit den Dichtelementen später noch näher erläutert werden. Hinter den Aufnahmen 13 liegt eine umlaufende Wand 14 des Gehäuses 10, die das Gehäuse 10 abdichtet, wobei im Bereich der Aufnahmen 13 Sollbruchstellen vorgesehen sind. Die umlaufende Wand 14 ist besonders gut in Fig. 3 zu erkennen. Dabei ist weiter dargestellt, dass in die beiden äußeren Aufnahmen 13 jeweils ein Dichtelement 40 eingesetzt ist, durch die Bündeladerkabel 50 in die Box 1 ein- und herausführbar sind. Das Dichtelement 40 besteht aus zwei Halbschalen 40a, 40b, die vorzugsweise miteinander verrastbar sind. Die Aufnahmen 13 für die Dichtelemente 40 umfassen jeweils an einer Seite eine Rastnase 15. Soll nun ein Bündeladerkabel 50 oder eine Bündelader in die Box 1 geführt werden, so wird die Wand 14 an Sollbruchstellen im Bereich der Aufnahme 13 herausgebrochen. Das Dichtelement 40 wird dann um das Bündeladerkabel 50 gelegt, wobei die beiden Halbschalen 40a, 40b miteinander verrastet werden. Anschließend wird das Dichtelement 40 in die Aufnahme 13 gedrückt, wobei die Rastnasen 15 über dem Dichtelement 40 einschnappen. Dadurch ist die Dichtung 40 stabil mit dem Gehäuse 10 verrastet. Weiter umfasst das Gehäuse 10 mehrere an den Seiten 17, 18 angeordnete Aufnahmen 13, deren Funktion später noch näher erläutert wird. Zur definierten Ablage der Bündeladern 51 wird der Schutzmantel des Bündeladerkabels 50 partiell entfernt und die vereinzelten Bündeladern 51 um die Umlenkelemente 16 gewickelt. Zur Einhaltung des Mindestbiegeradius werden dann schließlich die Bündeladern 51 hinter einem Kopplungselement 70 geführt und wieder nach vorne in Richtung Stirnseite 12 geführt und schließlich als Bündeladerkabel 50 mit Schutzmantel durch die andere Dichtung 40 aus der Box 1 herausgeführt. Die Umlenkelemente 16, das Kopplungselement 70 sowie weitere dargestellte Führungselemente sind auf einer Bodenplatte 19 angeordnet, die mittels Schrauben 60 mit dem Gehäuse 10 verbunden ist. Über die lösbare Bodenplatte 19 kann die Box 1 verschiedenartig bestückt werden, was die Flexibilität der Box 1 erhöht.

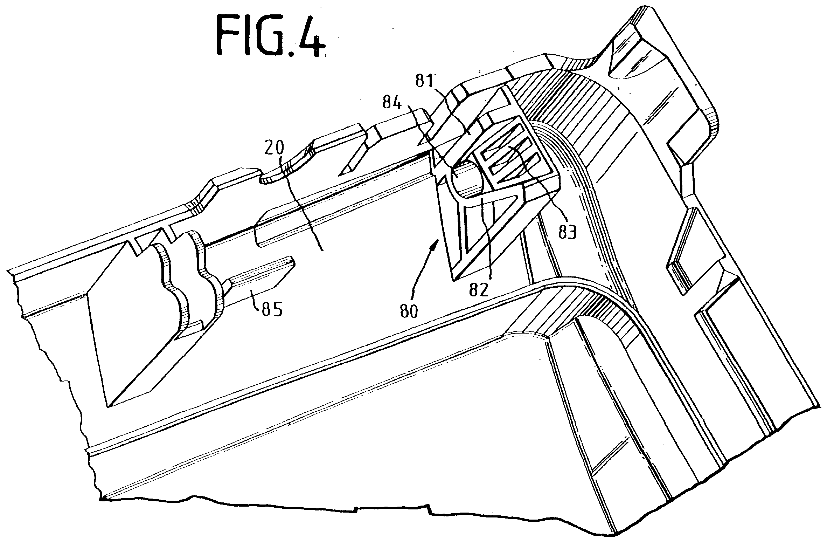

Nachfolgend soll zunächst die Verbindung zwischen Deckel 20 und Gehäuse 10 anhand der Fig. 4 bis Fig. 6 näher erläutert werden. Dabei zeigt Fig. 4 eine Detaildarstellung eines Aufnahmeelements 80 (nachfolgend kurz Aufnahme bezeichnet) für ein noch zu erläuterndes Achselement. Die Aufnahme 80 ist am Deckel 20 angeordnet und umfasst eine erste Seitenwand 81 und eine zweite Seitenwand 82 sowie eine geschlitzte, schräg nach unten verlaufende Rückwand 83, die in ein Sackloch 84 übergeht. Dabei verläuft die zweite Seitenwand 82 ebenfalls schräg nach unten in Richtung Sackloch 84. Des Weiteren ist eine Anschlagkante 85 dargestellt, deren Funktion noch erläutert wird.

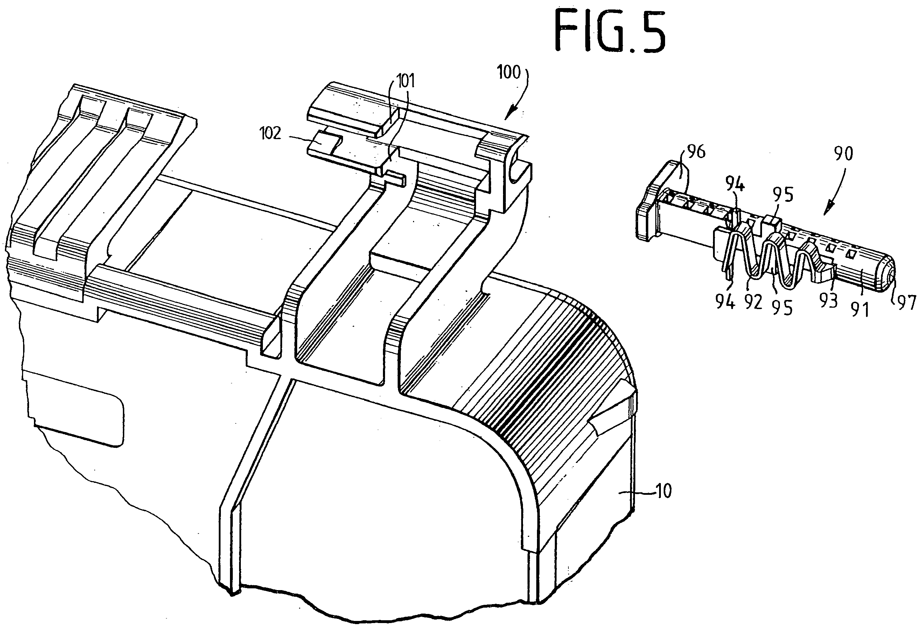

Das Achselement 90 ist in Fig. 5 dargestellt. Das Achselement 90 umfasst einen Stift 91, an dem seitlich ein Federelement 92 (nachfolgend kurz Feder bezeichnet) angeordnet ist. Die Feder 92 ist einseitig an einer Anbindung 93 fest mit dem Stift 91 verbunden. An dem freien Ende weist die Feder 92 zwei Abstützstellen 94 auf. Weiter weist der Stift 91 zwei Anschlagelemente 95 auf. Das Achselement 90 weist schließlich noch eine Lasche 96 auf. An der der Lasche 96 entgegengesetzten Seite ist der Stift 91 mit einer Abrundung 97 ausgebildet.

Das Achselement 90 ist dabei vorzugsweise als einteiliges bzw. einstückiges Spritzgussteil ausgebildet.

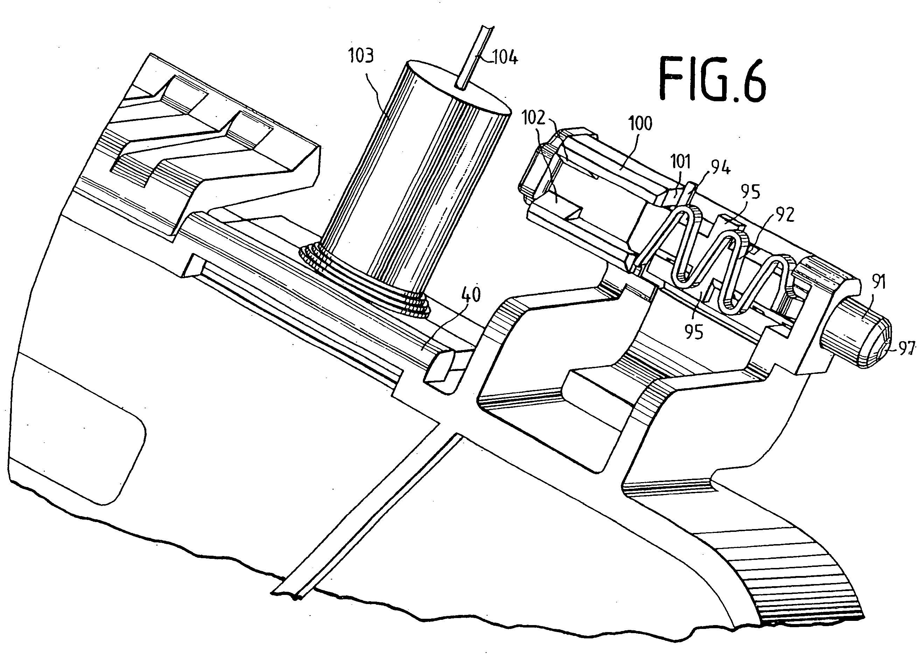

Das Achselement 90 wird in einen Achselementhalter 100 eingeclipt, was in Fig. 6 dargestellt ist, wobei sich die Abstützstellen 94 an Anschlagkanten 101 abstützen. Dabei umgreifen Rastnasen 102 des Achselementhalters 100 das Achselement 90, so dass dieses verliersicher angeordnet ist. In Fig. 6 ist der entspannte Zustand dargestellt. Durch eine Kraft in axialer Richtung kann das Achselement 90 in Richtung der Anschlagkanten 101 bewegt werden, wobei sich dann die Feder 92 staucht. Dabei begrenzen die Anschlagelemente 95 die maximale Stauchung. Wird nun der Deckel 20 mit der Aufnahme 80 an das Achselement 90 angesetzt, so kann der Stift 91 aufgrund der Schrägstellung der Seite 82 leicht angesetzt werden. Wird dann der Deckel 20 weiter gedrückt, so gleitet die Rückwand 83 am Achselement 90 entlang. Durch die Schrägstellung der Rückwand wird der Stift 91 eingedrückt und die Feder 92 gestaucht, bis das Sackloch 84 erreicht ist. Dann entspannt sich die Feder 92 und der Stift 91 fährt mit seiner Abrundung 97 in das Sackloch 84. Dadurch sind Deckel 20 und Gehäuse 10 befestigt. Im befestigten Zustand mit geschlossenem Deckel 20 verhindert die Anschlagkante 85 eine Bewegung des Achselements 90, d.h. bei geschlossenem Deckel 20 kann das Achselement 90 nicht aus dem Sackloch 84 herausgezogen werden. Das Lösen des Deckels 20 erfolgt bei geöffnetem Deckel 20. Dabei wird die Lasche 96 in axialer Richtung von der Feder weg gezogen. Dadurch wird die Feder gestaucht und der Stift 91 bewegt sich aus dem Sackloch 84. Der Deckel 20 ist somit entriegelt und kann vom Gehäuse 10 abgenommen werden. Dabei sei angemerkt, dass die Schwenkachse des Deckels 20 identisch ist mit der zentralen Längsachse des Achselements 90. Die Position, wo das Achselement 90 in das Sackloch 84 eintaucht, ist dabei eine befestigte Ausgangsstellung. Ist der Deckel 20 entfernt, befindet sich das Achselement 90 in einer unbefestigten Ausgangsstellung. Dabei ist die Feder 92 jeweils entspannt bzw. steht unter einer definierten Vorspannung. Sowohl durch Ziehen an den Laschen 96 zum Entfernen des Deckels 20 bzw. umgekehrt beim Raufschieben des Deckels 20 entlang der geschrägten Rückwand 83 wird das Achselement 90 in (mindestens) eine zweite Stellung bewegt, in der die Feder 92 gestaucht ist. Wie insbesondere in Fig. 3 gezeigt, weist die Box zwei Aufnahmen 80 und zwei Achselemente 90 auf. Weiter ist in Fig. 6 noch ein Kabel 103 mit mindestens einem Lichtwellenleiter 104 dargestellt, das durch ein Dichtelement 40 geführt wird. Hierzu sind auch an der hinteren Stirnseite zwei Aufnahmen 13 angeordnet.

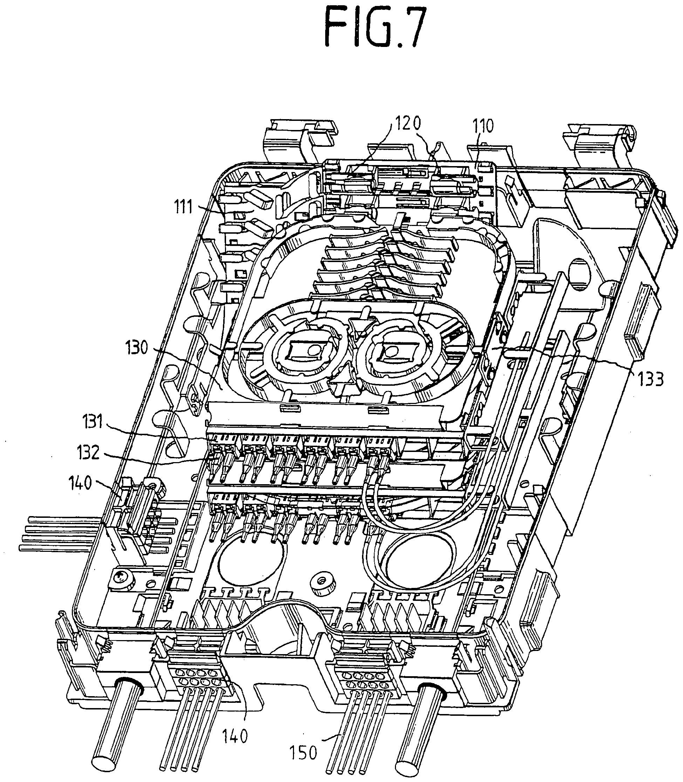

In Fig. 7 ist perspektivisch ein voll bestücktes Gehäuse 10 dargestellt. Dabei ist auf das Kopplungselement 70 (siehe Fig. 3) ein Achshalter 110 aufgerastet, der vorzugsweise in einem Winkel von ca. 45 Grad gegen die Bodenplatte 19 (siehe Fig. 3) angestellt ist. An den Achshalter 110 sind Achselemente 120 befestigt, die vorzugsweise mit dem Achshalter 110 verrastet sind. Auf diese Achselemente 120 sind Kassetten 130 aufgeschnappt, die dann um die Achselemente 120 geschwenkt werden können. Dabei weisen die Kassetten 130 Aufnahmen auf, die um die Achselemente 120 schnappen. Die Achselemente 120 bleiben daher bei einer Schwenkbewegung der Kassette 130 fest. Die Achselemente 120 sind dabei als Hohlzylinder mit Schlitz ausgebildet, so dass in diesen Adern geführt werden können, die durch eine Schwenkbewegung der Kassetten nicht gestört werden. Hierzu sind seitlich an dem Achshalter 110 Führungselemente 111 angeordnet, mittels derer Lichtwellenleiter in die Achselemente 120 führbar sind. Bei den dargestellten Kassetten handelt es sich um Term-Spleiß-Kassetten. Eine Term-Spleiß-Kassette besteht aus einer Term-Kassette mit Adaptern 131 für Glasfaserstecker 132 und eine Spleißkassette, die oberhalb der Term-Kassette angeordnet ist. Die beiden Kassetten sind dabei mittels Rastplatten 133 zu einer Baueinheit zusammengefügt. Über Öffnungen in der Spleißkassette können dann Pigtails direkt in die Term-Kassette geführt werden, wobei die Glasfaserstecker der Pigtails in die Rückseite der Adapter 131 gesteckt sind. In der Fig. 7 sind zwei Term-Spleiß-Kassetten dargestellt, wobei an der Vorderseite der Adapter 131 Glasfaserstecker 132 eingesteckt sind.

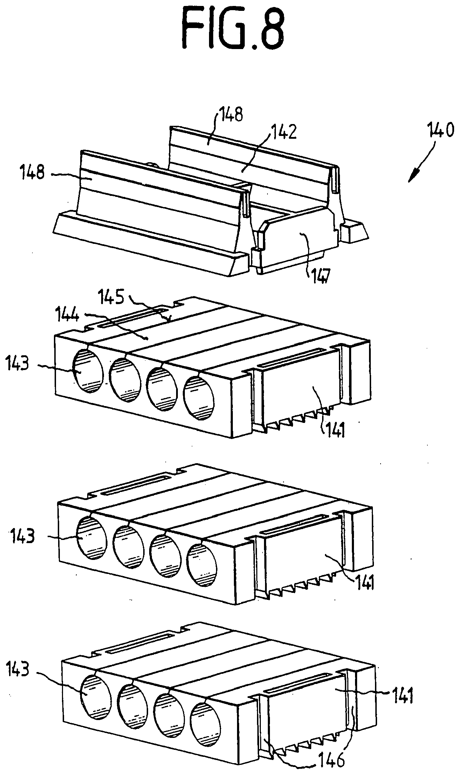

Weiter ist in Fig. 7 dargestellt, dass an der vorderen Stirnseite 12 zwei Dichtelemente 140 und an der Seite 18 ein Dichtelement 140 für Lichtwellenleiter, insbesondere Patchkabel, angeordnet sind. Das Dichtelement 140 setzt sich aus drei Dichtkörpern 141 und einem Endstück 142 zusammen (siehe Fig. 8). Dabei weist jeder Dichtkörper 141 vier zylindrische Durchlässe 143 auf, wobei von der Oberseite 144 ein Schlitz 145 bis zum Durchlass 143 verläuft. Somit kann der Dichtkörper 141 am Schlitz 145 aufgebogen werden und ein Patchkabel 150 mit Glasfasersteckern 132 in den Durchlass 143 eingelegt werden, dessen Glasfaserstecker 132 nicht durch den Durchlass 143 passen würde. Die Dichtkörper 141 werden nach Einlegung der Kabel zusammengesteckt und schließlich das Endstück 142 auf den obersten Dichtkörper 141 gesteckt. Die Dichtkörper 141 weisen weiter Nuten 146 auf, so dass das Dichtelement 140 an Kanten des Gehäuses 10 aufgesteckt werden kann. Schließlich rasten die Rastnasen 15 über die Stege 147 des Endstücks 142. Weiter weist das Endstück 142 Dichtlippen 148 auf, die mit dem Rand des Gehäuses 10 abschließen.

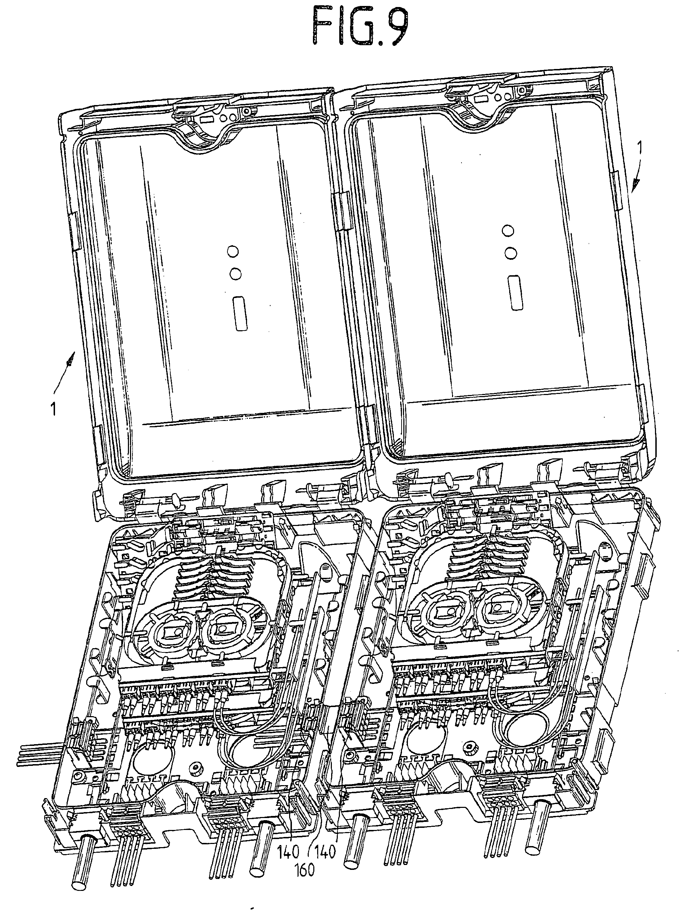

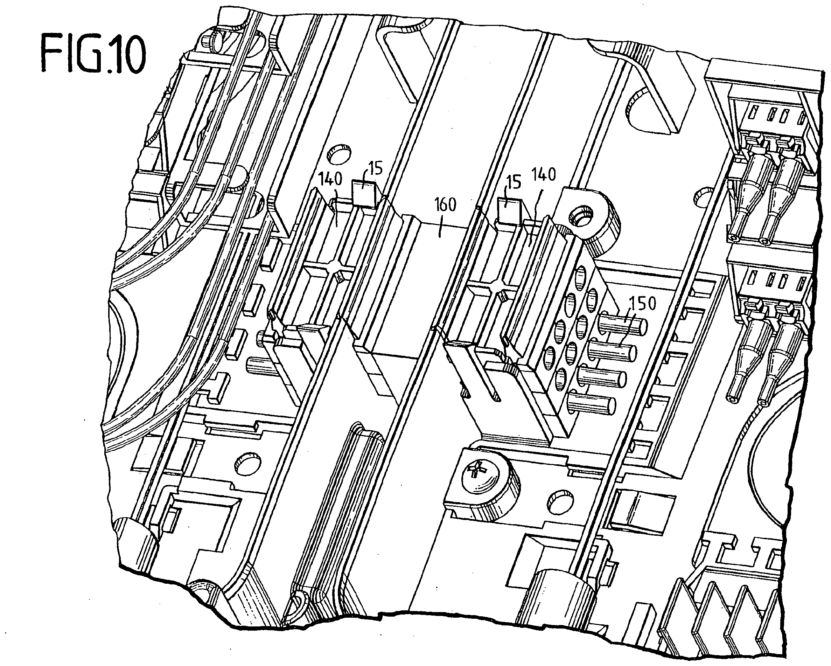

Schließlich ist in den Fig. 9 und 10 dargestellt, wie zwei erfindungsgemäße Boxen 1 seitlich aneinandergereiht sind. Über die jeweils seitlich angeordneten Dichtelemente 140 können dabei Lichtwellenleiter bzw. Patchkabel 150 von einer Box 1 direkt in die benachbarte Box 1 geführt werden. Dabei werden die Lichtwellenleiter bzw. Patchkabel 150 zwischen den Boxen 1 durch ein Verbindungselement 160 mit mindestens einem Verbindungskanal geführt. Das Verbindungselement 160 verrastet dabei vorzugsweise zusammen mit dem Abdichtelement 140 in der Aufnahme 13.

### Bezugszeichenliste

- 1: Box
- 10: Gehäuse
- 11: Aufnahme
- 12: vordere Stirnseite
- 13: Aufnahmen
- 14: umlaufende Wand
- 15: Rastnase
- 16: Umlenkelement
- 17, 18: Seiten
- 19: Bodenplatte
- 20: Deckel
- 21: hinterer Bereich
- 22: Rastlasche
- 23: Rastnase
- 40: Dichtelement
- 40a, 40b: Halbschalen
- 50: Bündeladerkabel
- 51: Bündelader
- 60: Schrauben
- 70: Kopplungselement
- 80: Aufnahme
- 81: erste Seitenwand
- 82: zweite Seitenwand
- 83: Rückwand
- 84: Sackloch
- 85: Anschlagkante
- 90: Achselement
- 91: Stift
- 92: Feder
- 93: Anbindung
- 94: Abstützstellen
- 95: Anschlagelemente
- 96: Lasche
- 97: Abrundung
- 100: Achselementhalter
- 101: Anschlagkanten
- 102: Rastnasen
- 103: Kabel
- 104: Lichtwellenleiter
- 110: Achshalter
- 111: Führungselement
- 120: Achselemente
- 130: Kassetten
- 131: Adapter
- 132: Glasfaserstecker
- 133: Rastplatten
- 140: Dichtelemente
- 141: Dichtkörper
- 142: Endstück
- 143: Durchlässe
- 144: Oberseite
- 145: Schlitz
- 146: Nut
- 147: Steg
- 148: Dichtlippe
- 150: Patchkabel
- 160: Verbindungselement

## Patentansprüche

1. Box (1) zur Aufnahme und Ablage von Lichtwellen- und/oder Kupferleitern, wobei die Box (1) mindestens ein Gehäuse (10) und mindestens einen Deckel (20) umfasst, wobei der Deckel (20) schwenkbar an dem Gehäuse (10) befestigt ist, wobei der Deckel (20) lösbar an dem Gehäuse (10) befestigt ist,
wobei der Deckel (20) mindestens ein Aufnahmeelement (80) für ein Achselement (90) aufweist,
wobei das Gehäuse (10) das mindestens eine Achselement (90) aufweist,
wobei das mindestens eine Achselement (90) von dem Aufnahmeelement (80) aufnehmbar ist,
**dadurch gekennzeichnet, dass**
das mindestens eine Achselement (90) relativ zum Aufnahmeelement (80) parallel zu einer Schwenkachse verschiebbar ist, wobei die Box (1) mindestens ein Federelement (92) aufweist, wobei mittels des mindestens einen Federelements (92) eine Rückstellkraft auf das mindestens eine Achselement (90) oder das Aufnahmeelement (80) in eine Richtung parallel zur Schwenkachse ausübbar ist, falls das mindestens eine Achselement (90) aus einer Ausgangsstellung des mindestens einen Achselements (90) relativ zum Aufnahmeelement (80) verschoben wurde, wobei das Federelement (92) an dem Achselement (90) angespritzt ist.

2. Box nach Anspruch 1, **dadurch gekennzeichnet, dass** das Gehäuse (10) und/oder der Deckel (20) Anschlagelemente aufweisen, die eine axiale Bewegung des Achselements (90) relativ zum Aufnahmeelement (80) auf eine Bewegung zwischen der Ausgangsstellung und einer zweiten Stellung begrenzen.

3. Box nach einem der vorangegangenen Ansprüche, **dadurch gekennzeichnet, dass** das Aufnahmeelement (80) Mittel zum Unterstützen des Anbringens des Deckels (20) aufweist, wobei mittels der Mittel zum Unterstützen des Anbringens eine Kraft auf das Achselement (90) übertragbar ist, die der Rückstellkraft entgegengesetzt ist.

4. Box nach Anspruch 3, **dadurch gekennzeichnet, dass** das Mittel zum Unterstützen des Anbringens als geschrägte Fläche ausgebildet ist.

5. Box nach einem der vorangegangenen Ansprüche, **dadurch gekennzeichnet, dass** die Box (1) mindestens ein Aufnahmeelement (13) für mindestens ein Dichtelement (40, 140) aufweist, wobei mittels des Aufnahmeelements (13) mindestens ein Dichtelement (40, 140) an der Box (1) arretierbar ist.

6. Box nach einem der vorangegangenen Ansprüche, **dadurch gekennzeichnet, dass** die Box (1) mindestens ein Aufnahmeelement für mindestens einen Achshalter (110) aufweist, wobei mittels des Achshalters (110) mindestens ein Achselement (120) an der Box (1) befestigbar ist.

7. Box nach einem der vorangegangenen Ansprüche, **dadurch gekennzeichnet, dass** die Box (1) mindestens eine Vorrichtung zur Ablage von Bündeladern aufweist.

8. Box nach einem der vorangegangenen Ansprüche, **dadurch gekennzeichnet, dass** die Box (1) mindestens ein Befestigungselement für mindestens ein Element zur Kabelführung aufweist, wobei mittels des mindestens einen Elements zur Kabelführung mindestens eine Bündelader und/oder ein Lichtwellenleiter mit einem vorbestimmten Biegeradius führbar ist.

9. Box nach einem der vorangegangenen Ansprüche, **dadurch gekennzeichnet, dass** mindestens eine Seitenwand der Box (1) eine Sollbruchstelle aufweist.

10. Box nach einem der vorangegangen Ansprüche, **dadurch gekennzeichnet, dass** die Box (1) mindestens eine Vorrichtung zur Aufnahme mindestens eines Verbindungselements (160) aufweist.

## Claims

1. Box (1) for receiving and depositing fibre-optic and/or copper cables, wherein the box (1) comprises at least one housing (10) and at least one lid (20), wherein the lid (20) is fastened so as to be pivotable on the housing (10), wherein the lid (20) is fastened so as to be releasable from the housing (10),
wherein the lid (20) has at least one receptacle element (80) for an axle element (90),
wherein the housing (10) has the at least one axle element (90),
wherein the at least one axle element (90) is receivable by the receptacle element (80),
**characterized in that**
the at least one axle element (90) in a manner parallel with a pivot axis is displaceable relative to the receptacle element (80), wherein the box (1) has at least one spring element (92), wherein if and when the at least one axle element (90) from an initial position of the at least one axle element (90) has been displaced relative to the receptacle element (80), a restoring force in a direction parallel with the pivot axis is exertable on the at least one axle element (90) or on the receptacle element (80) by means of the at least one spring element (92), wherein the spring element (92) is injection-moulded to the axle element (90).

2. Box according to Claim 1, **characterized in that** the housing (10) and/or the lid (20) have detent elements which restrict an axial movement of the axle element (90) relative to the receptacle element (80) to a movement between the initial position and a second position.

3. Box according to one of the preceding claims, **characterized in that** the receptacle element (80) has means for facilitating the fitting of the lid (20), wherein a force which is counter to the restoring force is transmittable to the axle element (90) by means of the means for facilitating the fitting.

4. Box according to Claim 3, **characterized in that** the means for facilitating the fitting is configured as a bevelled face.

5. Box according to one of the preceding claims, **characterized in that** the box (1) has at least one receptacle element (13) for at least one sealing element (40, 140), wherein at least one sealing element (40, 140) is lockable to the box (1) by means of the receptacle element (13).

6. Box according to one of the preceding claims, **characterized in that** the box (1) has at least one receptacle element for at least one axle holder (110), wherein at least one axle element (120) is fastenable to the box (1) by means of the axle holder (110).

7. Box according to one of the preceding claims, **characterized in that** the box (1) has at least one device for depositing buffered fibres.

8. Box according to one of the preceding claims, **characterized in that** the box (1) has at least one fastening element for at least one element for cable routing, wherein at least one buffered fibre and/or one optical-fibre cable is routable at a predetermined bending radius by means of the at least one element for cable routing.

9. Box according to one of the preceding claims, **characterized in that** at least one side wall of the box (1) has a predetermined breaking point.

10. Box according to one of the preceding claims, **characterized in that** the box (1) has at least one device for receiving at least one connection element (160).

## Revendications

1. Boîte (1) destinée à recevoir des conducteurs à fibres optiques et/ou en cuivre, dans laquelle la boîte (1) comprend au moins un boîtier (10) et au moins un couvercle (20), dans lequel le couvercle (20) est fixé de manière pivotante au boîtier (10), dans lequel le couvercle (20) est fixé de manière amovible au boîtier (10),
dans lequel le couvercle (20) comporte au moins un élément de réception (80) destiné à un élément formant axe (90),
dans lequel le boîtier (10) comporte l'au moins un élément formant axe (90),
dans lequel l'au moins un élément formant axe (90) peut être reçu par l'élément de réception (80),
**caractérisé en ce que** l'au moins un élément formant axe (90) peut être déplacé par rapport à l'élément de réception (80) parallèlement à un axe de pivotement, dans lequel la boîte (1) comporte au moins un élément à ressort (92), dans lequel une force de rappel peut être exercée sur l'au moins un élément formant axe (90) ou sur l'élément de réception (80) dans une direction parallèle à l'axe de pivotement au moyen de l'au moins un élément à ressort (92), dans le cas où l'au moins un élément formant axe (90) a été déplacé par rapport à une position de départ de l'au moins un élément formant axe (90) par rapport à l'élément de réception (80), dans lequel l'élément à ressort (92) est moulé par injection sur l'élément formant axe (90).

2. Boîte selon la revendication 1, **caractérisée en ce que** le boîtier (10) et/ou le couvercle (20) comporte/comportent des éléments de butée qui limitent le mouvement axial de l'élément formant axe (90) par rapport à l'élément de réception (80) à un mouvement entre la position de départ et une seconde position.

3. Boîte selon l'une quelconque des revendications précédentes, **caractérisée en ce que** l'élément de réception (80) comporte des moyens destinés à assister au montage du couvercle (20), dans lequel une force opposée à la force de rappel peut être transmise par les moyens d'aide au montage à l'élément formant axe (90).

4. Boîte selon la revendication 3, **caractérisée en ce que** le moyen d'aide au montage est réalisé sous la forme d'une surface inclinée.

5. Boîte selon l'une quelconque des revendications précédentes, **caractérisée en ce que** la boîte (1) comporte au moins un élément de réception (13) destiné à un élément d'étanchéité (40, 140), dans laquelle au moins un élément d'étanchéité (40, 140) peut être bloqué sur la boîte (1) au moyen de l'élément de réception (13).

6. Boîte selon l'une quelconque des revendications précédentes, **caractérisée en ce que** la boîte (1) comporte au moins un élément de réception destiné à au moins un support d'axe (110), dans lequel au moins un élément formant axe (120) peut être fixé à la boîte (1) au moyen du support d'axe (110).

7. Boîte selon l'une quelconque des revendications précédentes, **caractérisée en ce que** la boîte (1) comporte au moins un dispositif destiné au rangement de tubes pour faisceau de câbles.

8. Boîte selon l'une quelconque des revendications précédentes, **caractérisée en ce que** la boîte (1) comporte au moins un élément de fixation destiné à au moins un élément de guidage de câbles, dans lequel au moins un tube pour faisceau de câbles et/ou un guide d'ondes optique ayant un rayon de courbure prédéterminé peut être guidé au moyen de l'au moins un élément de guidage de câbles.

9. Boîte selon l'une quelconque des revendications précédentes, **caractérisé en ce qu'**au moins une paroi latérale de la boîte (1) comporte un point de rupture théorique.

10. Boîte selon l'une quelconque des revendications précédentes, **caractérisé en ce que** la boîte (1) comporte au moins un dispositif destiné à recevoir un élément de liaison (160).
